# EUROPEAN PATENT APPLICATION

(11) **EP 4 447 503 A1**
(43) Date of publication of application: **16.10.2024**
(21) Application number: 24169564.2
(22) Date of filing: 10.04.2024
(51) Int. Cl.: H04W 4/12, H04L 49/25, H04W 4/80, H04L 45/28

(54) **METHOD FOR MESSAGE TRANSMISSION BETWEEN DEVICES, DEVICE FOR FORWARDING MESSAGES BETWEEN DEVICES, AND SYSTEM FOR MESSAGE TRANSMISSION BETWEEN DEVICES**

(30) Priority: 13.04.2023 WO PCT/CN2023/088066
(71) Applicant: Orange, 92130 Issy-les-Moulineaux (FR)
(72) Inventor: JIAO, Shi, BEIJING, 100013 (CN); GUO, Zhihong, BEIJING, 100013 (CN)
(74) Representative: Plasseraud IP

(57) **Abstract**

The invention relates to a method for message transmission between devices, comprising:
- storing a first message received from a first device (A) through internet, said first message being intended for a second device (B); and
- after a positive determination that a short-range wireless connection is established with said second device (B), forwarding the first message to said second device (B) through said short-range wireless connection.

The invention provides a simple and wise solution to transmit a message between two devices in case there is no internet connection available for the second device.

## Description

### TECHNICAL FIELD

The present invention relates to the field of message transmission between devices, such as mobile phones, laptops, or other devices with messaging capabilities.

### BACKGROUND

In today's connected world, communication through messages, such as instant messaging, email, and other internet-based channels has become an essential part of daily life. The widespread availability of the internet and mobile devices has made it possible for people to communicate with one another from anywhere, at any time.

A known method of message transmission is through the internet, using communication protocols such as TCP/IP and HTTP, via wire or wireless communication, such as cellular network-based communication. This allows messages to be sent and received in real-time, providing a fast and efficient way to communicate.

However, there are still many situations where internet connectivity is not available or is unreliable, such as in remote or rural areas, or during natural disasters or other events that disrupt infrastructure. When the internet connectivity is unreliable, messages can be lost or fail to transmit due to lack of internet connectivity. In such a case, one can try to communicate with others by traditional letters, through which it is hard to share multimedia contents, such as videos, in an efficient manner.

In "Design and implementation of the KioskNet system", Guo S et al, COMPUTER NETWORKS, ELESEVIER, AMSTERDAM, NL, vo. 66, no 1, 7 January 2011 (2011-01-07), pages 264-281, XP027596887, a so-called "KioskNet" architecture is described, which is primarily designed for areas with limited internet access, often in developing countries, and intends to improve the sustainability and robustness of rural Internet kiosks in developing countries.

Such an architecture employs a combination of stationary kiosks and mobile ferries (vehicles) to provide digital connectivity. More precisely, computer "Kiosk" controllers are implemented in so-called kiosks, these controllers being able to communicate wirelessly with a computer mounted on a vehicle (such as a bus) which can carry data to and from a gateway, where these data can be further exchanger with the internet.

However, such an architecture is rather technically complex and costly since, in order to send emails as well as data to various types of network applications (e.g. financial applications), it includes not only a personal computer with the email client itself, but also OCMP, SMTP plugin, as well as gateway and proxy servers, among others.

In "Fair Delay Tolerant Mobile Data Ferrying", Mao Ye et al, Mobile Data Management: Systems, services and middleware, 2009. MDM'09, Tenth International Conference On, IEEE, Piscataway, NJ, USA, 18 May 2009 (2009-05-18), pages 182-191, XP031476819, a method for fair and efficient internet service in rural areas using a ferry-based system is described. This method focuses on scheduling and optimizing the delivery of messages through ferries to various village kiosks from an internet gateway, and thus addresses the challenge of bringing low-cost internet access to remote rural areas using ferries such as buses and cars equipped with Wi-Fi for message ferrying between the internet and remote villages.

Patent application EP3220612A1 discloses a system for sharing delay tolerant content, where a stationary node, called a "connected throwbox" and similar to other nodes of a mobile network, can download data from this mobile network in order to forward them to smartphones, through a D2D connection technology, whenever these smartphones move enter the Wifi coverage area of this stationary connected throwbox. While such a system enables smartphones to receive data without having to connect to a mobile network, it requires these smartphones to move within the Wifi coverage area of such a stationary connected throwbox, which itself needs to be under the coverage of a mobile network. This is not always possible and is actually impracticable in countries where the mobile network is limited to a few areas. Besides, such a system cannot be relied upon in case internet connectivity is lost due to natural disasters or other events that disrupt infrastructure.

The present invention aims thus to provide a method, a device, and a system to transmit messages when the internet connectivity is not available, in a more cost effective and technically simple way.

### SUMMARY OF THE INVENTION

In this regard, according to one aspect of the invention, it is provided a method for message transmission between devices, comprising:
- storing a first message received from a first device through internet, said first message being intended for a second device; and
- after a positive determination that a short-range wireless connection with said second device is established, forwarding the first message to said second device through said short-range wireless connection.

By virtue of such a method, it provides a simple and wise solution to transmit message between two devices in case of no internet connection for the second device.

In an embodiment, the steps of storing and forwarding of the first message are performed by a third device, and the method according to the present invention further comprises:
- sending the first message from the first device to a web server through internet;
- sending the first message from the web server to the third device through internet.

By using a dedicated server such as a web server, it is more efficient and reliable to transmit the message between the first device and the third device, especially when the third device does not always have an internet connection.

In yet another embodiment, a first identification information related to the second device is inserted by the first device in the first message, said first identification information being used when sending the first message through internet and/or when forwarding the first message to the second device by the third device through a short-range wireless connection.

With this configuration, it is more efficient for the second device to be identified when forwarding the message.

In yet another embodiment, the method according to the present invention further comprises, after the step of forwarding the first message to said second device through said short-range wireless connection, deleting said first message.

With this additional step, the risks of a privacy breach regarding the forwarded first message, in case of a fraudulent access to the device forwarding it, are limited.

In an embodiment, this step of deleting said first message is automatically triggered upon the transmission, by said third device, of the first message towards said second device.

In an alternative embodiment, this step of deleting said first message is automatically triggered upon reception, by said third device, of a receipt acknowledge message, sent by one of said second device or dedicated server upon receiving said first message.

In yet another embodiment, the method according to the present invention further comprises:
- storing a second message received from the second device through a short-range wireless connection, said second message being intended for the first device; and
- after a positive determination that a connection to internet can be established, forwarding the second message towards said first device through internet.

With these additional steps, it is also possible for the first device to receive a response message from the second device when the internet connection is not available to the second device.

In another embodiment, the steps of storing and forwarding the second message are performed by a third device and wherein, before that the third device receives the second message from the second device, the method comprises the following steps, performed by the second device :
- detecting at least one device able to forward the second message to the first device ; and
- selecting said third device among the detected at least one device.

With this arrangement, it is possible to choose the most suitable device to perform the storing and forwarding steps for the second message.

In yet another embodiment, in the step of forwarding the second message towards the second device through internet, the method according to the present invention further comprises the following steps:
- sending the second message from a dedicated server to a fourth device which is capable of being associated through a short-range wireless connection with the first device;
- sending the second message from the fourth device to the first device (B) when a short-range wireless connection is established between the fourth device and the first device.

With such an additional arrangement, the present invention may provide both "direct" and "indirect" forwarding of the second message, which is useful when the first device is not reachable to the dedicated server via internet.

Furthermore, a second identification information related to the first device is inserted by the second device in the second message, said second identification information being used by the second device when forwarding the second message to the first device.

Alternatively, the method according to the present invention further comprises, after the step of forwarding the second message to said first device through internet, deleting said second message.

With this additional step, the risks of a privacy breach regarding the forwarded second message, in case of a fraudulent access to the device forwarding it, are limited.

Alternatively, the message includes text, voice, or video.

Alternatively, the first message is encrypted.

Alternatively, the short-range wireless connection is based on short-range wireless technology standard comprising Bluetooth or NFC.

According to another aspect of the invention, it is provided a device for forwarding messages between devices, said forwarding device comprising:
- a module for receiving a first message from a first device through internet, said first message being intended for a second device;
- a module for storing the received first message; and
- a module for, after a positive determination that said forwarding device has established a short-range wireless connection with said second device, forwarding the first message to said second device through said short-range wireless connection.

Moreover, the device further comprises:
- a module for receiving a second message from the second device through the short-range wireless connection, said second message being intended for said first device;
- a module for storing said second message; and
- a module for, after a positive determination that the forwarding device can connect with the first device through internet, forwarding the second message towards said first device through internet.

According to yet another aspect of the invention, it is provided a computer program comprising instructions which, when the program is executed by a processing module of a device (such as a processor or microprocessor of a mobile terminal), cause the processing module to carry out the method as mentioned above.

### BRIEF DESCRIPTION OF THE DRAWINGS

Other features and advantages of the present invention will appear in the description hereinafter, in reference to the appended drawings, where:
Figure 1 illustrates an exemplary embodiment according to the present invention.
Figure 2 illustrates a detailed exemplary embodiment of transmitting a first message from a first device A to a second device B;
Figure 3 illustrates a detailed exemplary embodiment of transmitting a second message from a second device B to a first device A; and
Figure 4 illustrates another detailed exemplary embodiment of transmitting a second message from a second device B to a first device A.

### DETAILED DESCRIPTION OF THE EMBODIMENTS

Hereinafter, exemplary embodiments according to the present invention will be described in detail with reference to the accompanying drawings.

The method according to the present invention is adapted to be used on various kinds of devices, such as mobile phones, laptops, or other devices with messaging capabilities. The embodiments of this application do not limit any specific type of these devices.

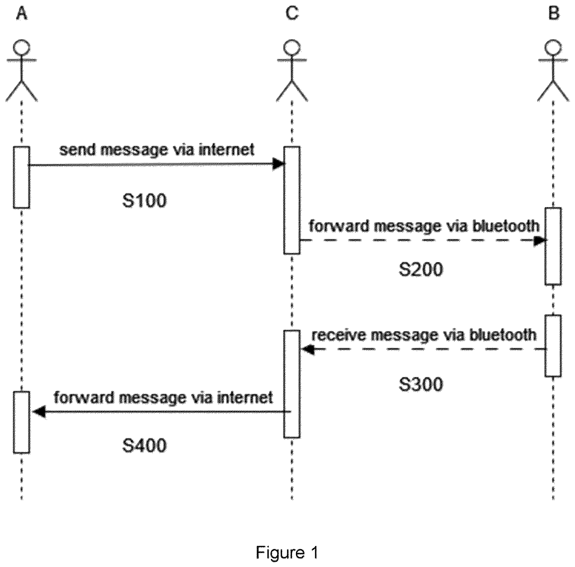

An exemplary method according to the present invention is now discussed with reference to **Figure 1****.**

In this exemplary method, in a situation where internet connection is available to a first device A, the first device A sends a first message intended for a target device, i.e. a second device B, comprising data such as text, voice, video, and/or any form of information, to a third device, i.e. a forwarding device C, through internet (step S100). Such a forwarding device C can be identified from an identification information related to the target device B, more particularly on the basis of an association between these two devices indicating that this device C has been designated as a message forwarding device for the second device B (for instance because it was previously marked as such by the second device B through a short range wireless connection) as explained later.

At this stage, this third device C is in a location where it has an internet connection but is not necessarily in the proximity of the second device B, and thus cannot forward yet the first message to the second device B through a short range wireless connection. Consequently, after having received this first message, the third device C may store the first message from the first device A in its memory module (for instance in a local database stored in the memory of this third device C). This allows the forwarding C to keep and transport this first message until it moves to a location where it is in the proximity of the second device B, i.e. where it can connect with this second device B through a short range wireless connection.

Afterwards, when the third device C determines that it can connect through a short-range wireless connection with the second device B, typically after it has moved in the vicinity of this second device B, which may be located in an area where the internet is no longer available, the forwarding device C forwards the first message to the second device B through a short-range wireless connection established with this second device B (step S200).

Here, the first message may contain a first identification information related to the second device B which is inserted by the first device A. Such a first identification information is for example the phone number of the second device B (in particular its cell phone number) and can be used when the first message is sent to the third device C and/or when this first message is forwarded to the second device B by the third device C.

In addition, after forwarding the first message to the second device B through the short-range wireless connection, the third device C may also be configured to delete the first message from its local database so that this first message is stored by the third device C only as long as necessary, i.e. from its reception until its forwarding to the second device B.

This deletion of the first message may be triggered automatically as soon as device C has transmitted this first message to the second device B through the short-range range wireless connection, or upon reception by the third device C of a receipt acknowledgement message, sent by the second device B through the short-range wireless connection upon reception of the first message. However, since this short-range wireless connection is usually a direct connection between devices located nearby from each other, the first of these two alternatives is the most appropriate in this case.

In another embodiment, according to the exemplary method in Figure 1, after having received the first message, the second device B may also send a second message, being intended for the first device A, to the third device C through the short-range wireless connection. Such a second message is typically a response to the first message.

In this case, in a situation where internet connection is not available to the second device B, the second device B sends the second message intended for the first second device A, comprising data such as text, voice, video, and/or any form of information, to the third device C, via a short-range wireless connection based on short-range wireless technology standard such as Bluetooth or NFC, or any other available short-range wireless technology (step S300).

After receiving such a second message, like for the first message, the forwarding device C stores this second message in the memory module embedded in this forwarding device C. This allows the forwarding device C, which may also be unable to connect to internet when it is located in the proximity of the second device B (for instance because the area where both devices B and C are located is not under any mobile network coverage), to keep and transport the message until device C moves to a location where an internet connection becomes available.

Then, when the forwarding device C determines an internet connectivity and connects to internet (typically because forwarding device C has moved to a location where such an internet connectivity becomes possible, for instance where a radio connection to a mobile network becomes available and an internet connection becomes possible through this radio connection), this forwarding device C forwards the second message to the first device A through internet (step S400).

In a specific embodiment, before sending the second message to the third device C, the second device B may first detect and list at least one device capable of forwarding the second message to the first device A, for instance by detecting the surrounding devices with which it can establish a short-range wireless connection based on a short-range wireless technology standard and determining, within these surrounding devices, which ones offer this forwarding service (for instance by detecting a device on which a dedicated application for forwarding message is installed). In such a case, the second device B then selects the third device C among the detected at least one device which is capable of forwarding the second message.

In an embodiment, the second message may also contain a second identification information related to the first device, which is inserted by the second device B into the second message. Such a second identification information is for example the phone number of the first device A (in particular its cell phone number) and can be used when the second message is forwarded to the first device A.

In another embodiment, after forwarding the second message towards the first device A through internet, the third device C may also be configured to delete the second message from its local database, so that this second message remains stored in this database only for the necessary amount of time, which guarantees that its privacy is preserved as much as possible while allowing a forwarding device to temporarily store it for the purpose of implementing this forwarding service.

In a first specific implementation of such an embodiment, the deletion of the second message by the third device C may be automatically triggered by the transmission, by this third device C, of the first message towards the first device A (e.g. the transmission of this second message to a dedicated server the third device C is associated with, once the internet connectivity is available for the third device C, as explained later), and preferably as soon as the second message has been transmitted by the third device C.

Such a specific implementation minimizes the temporary storage duration of the second message on the third device C, hence preserving its confidentiality towards a potentially malicious user accessing this third device C, at the cost of a risk for this third device C to leave the area where it has internet connectivity without being sure of a successful forwarding of this second message towards the first device A, should a network problem occur on its transmission path towards the first device A.

In an alternative implementation of such an embodiment, the deletion of the second message by the third device C may be automatically triggered by the reception of a receipt acknowledgement message, which is be emitted either by an intermediate device (such as a dedicated server the third device C is associated with or a fourth device D, as explained later) or by the second device C itself, upon reception of this second message.

The further away from the third device C is the device acknowledging receipt of the second message, the more the third device C is ensured that the second message is properly transmitted towards the first device A, at the cost of an increased duration of the temporary storage of this second message by the third device C :
In a first embodiment of this alternative implementation where a dedicated server associated with the third device C, to which the third device C forwards the second message as soon as it detects internet connectivity, sends to the third device C a receipt acknowledgement message of the second message, it is the reception of this receipt acknowledgement message that triggers the third device C to delete the second message. In such an implementation, the temporary storage duration of this second message by the third device C is longer than in the above-mentioned first specific implementation (hence weakening the confidentiality of this second message), but the third device C is ensured that the second message has reached the dedicated server through internet, and thus that it can leave the area where it has internet connectivity with a good prospect that this second message will be successfully delivered to the first device A. Such an embodiment is thus a good trade-off between preserving the confidentiality of the message to be forwarded and ensuring a successful delivery of this message.

In a second embodiment of this alternative implementation where the first device A sends to the third device C a receipt acknowledgement message of the second message, it is the reception of this receipt acknowledgement message that triggers the third device C to delete the second message. In such an implementation, the temporary storage duration of this second message by the third device C may be much longer than in the above-mentioned implementations (hence weakening even more than in the previous embodiment the confidentiality of this second message), but the third device C is ensured that the second message has reached its destination, and thus that it can not only leave the area where it has internet connectivity, but also that it can consider that its forwarding task has been fulfilled and act accordingly (e.g. inform the second device B of the successful delivery of the second message, etc.). Such an embodiment is thus the safest possible in terms of ensuring a proper delivery of the message to be forwarded, at the cost of a much longer temporary storage duration of the message by the forwarding device C, thus of increased risk regarding the confidentiality of this message.

In a specific aspect of this invention, the content of the first and/or the second message(s) can be at least partially, or more advantageously totally encrypted, such as by Advanced Encryption Standard AES, by their originating device (i.e. device A for the first message, device B for the second message) in such a way that the third device C is not able to decrypt at least the data content of these messages. This way, the user of the forwarding device C may not access the data content of the message(s) although they are temporarily stored by this third device C.

In a first embodiment of this specific aspect, the first and/or second identification information may remain unencrypted (the part of the message(s) containing data such as text, voice, video, and/or any form of information remains encrypted then), in order to allow the third device C to identify the intended recipient device for the message and to forward the message to this intended recipient device, be it through internet (in the case of the first message) or through a short-range wireless connection (in the case of the second message).

In a second embodiment of this specific aspect, the whole message(s) (including the second identification information related to the first device A) is encrypted so that the third device C not only has no access to the data content of the message(s), but also cannot identify the intended recipient device(s) of these message(s). In that case, when connected to internet, the third device C just forwards through internet the second message to a dedicated server it is associated with, without knowing which device is the final recipient of this message, nor the content of this message. It is then the dedicated server which will retrieve the identification information related to the first device A, in order to forward further this second message, as explained hereafter.

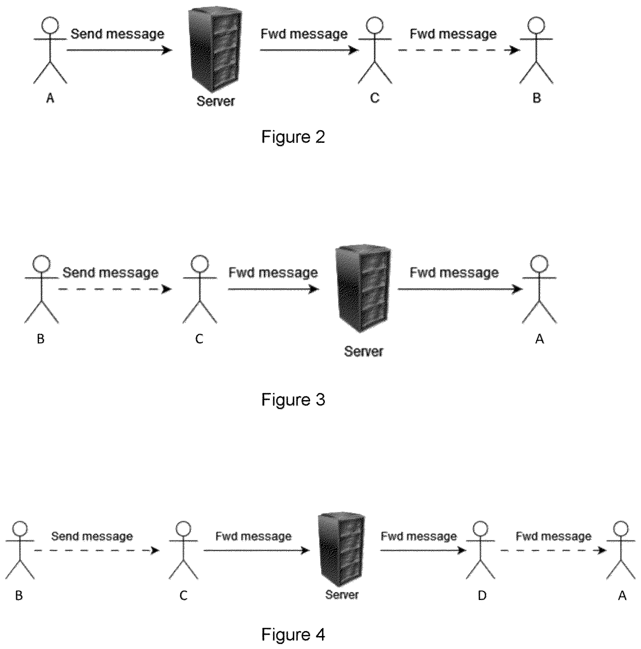

Referring now to **Figure 2****,** a more detailed embodiment of transmitting a first message from a first device A to a second device B is now discussed.

In this embodiment, the devices implemented according to the present invention can be smartphones, but these devices could be implemented by any kind of terminals, in particular any kind of mobile terminals. This is particularly the case for the third device C, which can be implemented in any kind of mobile terminal which has the ability to move from a first area where there is internet connectivity (and thus can exchange messages with a first device A located remotely, through internet) to a second area where there is not internet connectivity (and thus can exchange messages with a second device B located in such a first area though a short-range wireless connection).

When the first device A has internet connection and needs to send a first message towards the second device B, it includes identification information related to the second device B (such as the phone number of the second device B) in a first message to be forwarded to this second device B.

The first device A may send the first message being intended for the second device B via internet to a dedicated server, such as a web server. The dedicated server, when receiving this first message, may then determine if there is any forwarding device associated with this second device B. Such a determination can be performed systematically when receiving a message intended for a device or, alternatively, only after having verified that the second device B is not currently connected with the dedicated server, as in such a case it would then be possible to forward the first message directly from the dedicated server to this second device B, without the need of a forwarding device.

In order to perform such a determination, the dedicated server verifies if it has stored the information that a third device C has been designated as a forwarding device for the second device B.

This can be the case for instance if the second device B has already sent messages to the dedicated server through a forwarding device : in that case, the server has stored an identification information related to the second device B (e.g. its phone number) in association with an identification information related to the forwarding device it used (e.g. its phone number), for instance in a table storing a list of devices associated with their forwarding devices. By retrieving this association, the server can identify a forwarding device C able to forward the first message to the second device B.

Alternatively, a specific forwarding device C may have been already registered for second device B at the server, for instance by the second device B (or even the forwarding device C itself) sending to the server a request indicating that a third device C is a forwarding device for the second device B. Such a request can be transmitted to the dedicated server, for instance, after that both devices B and C have connected with each other through a short range wireless connection such as Bluetooth. Also in that case, by retrieving this indication, the server can identify a forwarding device C able to forward the first message to the second device B.

When the dedicated server has determined that a forwarding device C has been designated for the second device B, it may further verify if this forwarding device C is currently connected through internet and, if that is the case, the server forwards the first message (and the identification information related to the second device), and possibly any other message(s) it has stored which are intended to devices for which third device C acts as a forwarding device, to this third device C, either through a push request or upon receiving a pull request from this device C. This can be performed for instance using the HTTP protocol (or any other protocol that can exchange information over the Internet) when the dedicated server is a web server, and more particularly using a "HTTP/GET" request sent by the forwarding device C to the dedicated server or similar requests for obtaining messages from a web server. The forwarding device C may then send back an HTTP response which informs the dedicated server whether sending the first message succeeded or failed, as well as possibly the reason for the failure.

In the case where, after having retrieved the identity of a forwarding device C for the second device B, the dedicated server has verified that none of this forwarding device C and second device B currently has an internet connection established with the dedicated server, the dedicated server may store the first message, and possibly other incoming messages for the same second device B in the meantime, until it detects the establishment of a connection by one of these two devices. Thereafter, when detecting that one of these two devices establishes a connection to the dedicated server through internet, this dedicated server may then forward the first message (and possibly other messages for the second device B received in the meantime) to this connected device through this connection.

In the case where the forwarding device C receives the first message sent by the first device A (this first message being pushed by the dedicated server to this forwarding device C when it has internet connectivity), this third device C may store all the information in the first message, including the identification information (such as cell phone numbers) which may be sent together with this message or inserted in this message, in its memory module, and in particular in a local database stored in its memory.

Afterwards, after moving, when the third device C comes in the second device B's vicinity where a short-range wireless connection with this second device B is available (and possibly where no internet connection is available), the second device B may check with and request the third device C to provide any message intended to the second device B through short-range wireless connection.

In such a situation, when the third device C carries the first message it has received from the first device A through the dedicated server, the third device C sends this first message (which may include the cell phone number of the first device A) to second device B through a short-range wireless connection established with this second device B. When the information of the first message is encrypted, the second device B can then decrypt it, in order to display it properly on the second device B.

Referring now to **Figure 3****,** a more detailed embodiment of transmitting a second message from the second first device B to the first device A is now discussed.

After receiving the first message as illustrated in figure 2, the second device B may also send a second message being intended for the first device A. In this case, if the second device B does not have an internet connection but needs to send a second message (such as a response to the first message) to the first device B, it includes identification information related to the first device A (such as the phone number of the first device A) in the second message to be forwarded to this first device A.

The second device B can then list all surrounding devices through short-range wireless technology standard and identify in particular, within this list of surrounding devices, surrounding device(s) which have the capacity to forward the second message to the first device A (for instance, they can be identified by determining that an application dedicated to such a forwarding service is installed on these devices).

Assuming that a third device C, which has the capacity to forward the second message, is identified within the list of surrounding devices, the second device B can then send (or push) identification information related to itself (such as its own cell phone number), identification information related to the first device A (such as the first device's cell phone number), along with the second message intended for the first device A through the available short-range wireless connection established with this third device C, wherein all information may be encrypted, which means the third device C cannot see the cell phone numbers and the message. In particular, a smartphone system of the devices provides API interface to use short-range wireless technology. The second device B can list connected Bluetooth devices on its UI, on which the third device C can be selected as a forwarding device to forward the second message to the first device A. Alternatively, the identification information related to second device B and/or first device A can be inserted into the message itself, which may be encrypted so that the third device C is neither able to see its content, nor to extract this identification information

When the third device C arrives in an area with internet connectivity and determines that such an internet connection is available, the third device C can then connect to internet and send all the information in the second message it carries to the dedicated server through the Internet. This dedicated server is, for example, a web server, which can be reached once the third device C can connect to internet, and in particular an application server specifically associated with a message forwarding application software installed on the third device C, when such an application software is relied upon for carrying on this forwarding task.

The third device C can send the second message to this dedicated server, for instance through the HTTP protocol (or any other protocol that can exchange information over the Internet) when this dedicated server is a web server, and more particularly using a "HTTP/POST" request sent by the third device C or similar requests for sending messages to a web server. The server will then send back an HTTP response which informs the third device C whether sending the message succeeded or failed, as well as possibly the reason for the failure.

Moreover, the third device C may also use both pull mode and push mode to receive messages from the dedicated server. For instance, the third device C can send HTTP requests such as "HTTP/GET" requests to the web server, in order to pull messages at a certain frequency, the messages being then sent by the web server to the third device C in the response of the HTTP request. Alternatively, the dedicated server can also use a messaging server (for example, FCM of google) to push messages to the third device C.

Furthermore, the third device C preferably detects automatically that it has arrived in an area with internet connectivity. In particular, smartphones can detect whenever they are connected to Internet. For Android device, it can create a "Worker" module and set it to run automatically whenever the device connects to Internet.

Such a "Worker" module is a computer program which does not belong to an application or a service. It is typically part of an Application Programming Interface such as the WorkManager API in Android Jetpack, which is a lightweight background processing mechanism for executing asynchronous tasks. In the example of the WorkManager API in Android Jetpack, "Workers" run in WorkManager and can run within or outside the application process, such as in a background process or in a separate application, depending on the system resources and requirements.

The advantage of a "Worker" module is that it can run automatically at the appropriate time, such as when the device is idle, the battery is charged, or the network is available. "Workers" also support task chaining, allowing multiple "Workers" to be defined with a specified order and dependencies between them so that they can be executed sequentially when necessary. Unlike services, "Worker" lifecycle can be managed (e.g. by WorkManager) and they do not need to keep running all the time. They can stop automatically after completing their tasks.

Therefore, a "Worker" module is a mechanism that is well suited for executing background tasks. It can run within the application process or in a separate process or application, providing flexibility and reliability.

In the present case, the third device can create such a "worker" to send all information and set the "worker" to run automatically as soon as it connects to Internet. Then, the third device C will order that "worker" to send all information if it is connected to Internet automatically.

It should be noted that in the case where encryption (such as AES) is used in order to encrypt completely the second message, the third device C cannot decrypt the information related to the device(s) (such as their cell phone numbers), especially the one of the first device A, and the data content of this message, whereas the web server is able to decrypt at least the identification information related to the device(s) (such as their cell phone numbers), in order to forward the second message to the correct target recipient, i.e. the first device A. Alternatively, especially when the message itself contains the identification information related to the first device A, the web server is able to decrypt the message, in order to parse it for retrieving the identification information.

Afterwards, the dedicated server may forward the second message to the first device A and inform the first device A that the second message comes from the second device A based on the identification information related to the second device B (e.g. the second device's cell phone number) as received with the second message. Additionally, the server may also mark the third device C as a message carrier of the second device B, by memorising the identification information related to the second device B in associated with an identification information related to the third device C, the latter being indicated as being a forwarding device for the former.

In order to forward the second message to the first device A, the server may advantageously first determine if it this first device A is connected to internet, and in particular if there is an established connection between the dedicated server and this first device A. If that is the case, then the dedicated server can forward the second message to the first device A through internet. If not, the dedicated server waits (i.e. keep the second message stored in a memory) until it detects such a connection with the first device A, then forwards the second message after such a detection.

Referring now to **Figure 4****,** another detailed embodiment of transmitting a second message from the second device B to the first device A is now discussed.

This other embodiment is similar to the embodiment discussed previously in relation to figure 3, except that there is fourth device D provided between the server and the first device A, which acts as a forwarding device for this first device A and thus can provide the second message to this first device A without that this first B accesses internet.

In details, the second device B sends a second message (with an identification information related to the first device A such as its phone number) to the first forwarding device C through a short range wireless connection (e.g. Bluetooth) and, when the first forwarding device C is able to connect to internet, the first forwarding device C forwards this message (and the an identification information related to the first device A) to a dedicated server, as explained previously.

At this stage, instead of directly forwarding this message to the first device A as in the embodiment previously illustrated in figure 3, the server may determine whether a second forwarding device D would be associated with the first device A, similarly to what has been previously explained in relation to the determination that a forwarding device C is associated with second device B.

This can be the case for instance if the first device A has already sent messages through a forwarding device: in that case, the server has stored an identification information related to the first device A (e.g. its phone number) in association with an identification information related to the forwarding device it used (e.g. its phone number). By retrieving this association, the server can identify a second forwarding device D able to forward the second message to the first device A.

Alternatively, a second forwarding device D may have been already registered for first device A at the server, for instance by the first device A (or even the second forwarding device D) sending to the server a request indicating that the second forwarding device D is a forwarding device for the first device A. Also in that case, by retrieving this indication, the server can identify a second forwarding device D able to forward the second message to the first device A.

After having identified the device D, if the server detects a connection with this device D (which implies that this device D has an internet connection), the server forwards the second message (and the identification information related to the first device), and possibly any other message(s) it has stored which are intended to devices for which device D acts as a forwarding device, to this device D, either through a push request or upon receiving a pull request from this device D.

Once it has forwarded the message to the device D, the server can delete this second message from its memory, in order to limit the risk of privacy issues in case this server would be hacked.

Here again, similarly to what has been said previously regarding the deletion of this first message by the third device C, the deletion of this second message by the server can be automatically triggered as soon as the server has transmitted the second message to the device D or can be automatically triggered upon reception of a receipt acknowledgement message, sent by the fourth device D, respectively by the first device A, to the server upon reception of the second message.

In the first case, the duration of this second message temporary storage by the server is minimized (hence minimizing its confidentiality) but the server has no guarantee that this second message is properly delivered, while in the second case, the server can be ensured of the proper delivery of the second message to the device D, respectively the second device B, at the cost of a proportionally increased confidentiality risk in case this server would be hacked.

Once it has received this second message, the device D stores it in its local database until it detects, thanks to the identification information related to the first device A, that it can connect with this first device A through a short range wireless connection (e.g. Bluetooth). When this is the case (i.e. because for instance the device D has moved in the vicinity of this device A which is potentially without internet connection), device D first connects with first device A using this short range wireless technology, then forwards the second message to device A. After having forwarded the second message, device D can delete this message from its local database, in order to limit the risk of privacy issues if an unauthorized person gets access to this local database.

Similarly to what has been explained for the deletion of the first message by the third device C, this deletion of the second message by device D may be triggered automatically as soon as device D has transmitted this message to device A through the short-range range wireless connection, or upon reception by device D of a receipt acknowledgement message, sent by the first device A through the short-range wireless connection upon reception of the second message. However, since this short-range wireless connection is usually a direct connection between devices located nearby each other, the first of these two alternatives is the most appropriate in this case.

In the preceding description, a first embodiment (as previously discussed in relation to figure 3) concerning the "direct" forwarding of the second message from the dedicated server to device A, which is particularly advantageous when there is no known second forwarding device for this device A, as being distinguished from a second embodiment (as previously discussed in relation to figure 4) concerning the "indirect" forwarding of the second message, from the dedicated server to a second forwarding device D, then from this forwarding device D to device A.

However, in order to allow the dedicated server to offer both "direct" and "indirect" forwarding, another embodiment can be derived, which gathers the principles of both these embodiments.

In more details, once it has received and stored a second message intended to device A from the forwarding device C, the dedicated server may determine whether a connection through internet with either device A, or a forwarding device D for this device A, is available. If a connection through internet with device A is available, the dedicated server forwards the second message directly to device A, as explained in the embodiment discussed in relation with **figure 3****.** If no connection through internet with device A is available but a connection through internet with a forwarding device D (registered as a forwarding device for device A) is available, the dedicated server forwards the first message to forwarding device D, as explained in the embodiment discussed in relation with **figure 4****.** Finally, if no connection through internet with either device A or a forwarding device D for this device A is available, then the dedicated server waits (i.e. keep the first message stored in a memory) until it detects that such a connection through internet can be established, with either one of the device A or a forwarding device D for this device A. When that is the case, the dedicated server forwards the second message to the device with which a connection through internet is first established, as described in relation with either figure 3 or figure 4, depending on the type of device for which the availability of an internet connection detected.

In all the previously discussed embodiments, the devices have been described as either sending, forwarding or transmitting messages. In order to do so, on top of the usual features that such devices may comprise (i.e. one or more processors(s), an input interface such as a keyboard or a touchscreen, an output interface such as a screen, a memory, etc.), these devices may comprise specific modules for implementing the present invention, such as :
- A message transmitting module, configured to receive and prepare the message to be transmitted (for instance, among others, by encrypting it), to obtain the identification information related to the recipient of this message (e.g. the phone number of the second device B), to detect a potential forwarding device through a short range wireless connection such as Bluetooth and, when such a second device wireless connection is established, to send this message to this forwarding device using this short range wireless connection. Such a message transmitting module is typically used in the first device A when it sends the first message as illustrated in figure 2, but also in the second device B when it sends a second message as illustrated in figure 3.
- A message receiving module, configured to detect a potential forwarding device through a short range wireless connection such as Bluetooth, to receive messages from this forwarding device using this short range wireless connection when such a second device wireless connection is established, and to process this received message (for instance, among others, by decrypting it) so that this message can be read or displayed to its intended recipient. Such a message receiving module is typically used in the second device B when it receives the first message as illustrated in figure 2, but also in the first device A when it receives a second message as illustrated in figure 3.
- A message forwarding module, configured to receive messages from this dedicated server when an internet connection is available, store these messages, identify the intended recipient of these messages based on received identification information, forward these messages to the identified recipient device through a short range wireless connection such as Bluetooth, when such a short range wireless connection is established with this recipient device, and preferably delete these messages when they have been forwarded to the recipient device. This message forwarding module may also be configured to receive messages from other devices through a short range wireless connection such as Bluetooth, store these messages, forward these messages to a dedicated server when an internet connection is available and preferably delete these messages when they have been forwarded to the server.

Each of these specific modules may be implemented as a computer program comprising code instructions for performing the steps as described in relation with the specific module. This computer program can either be natively configured in a device (such as a mobile device, smartphone, tablet, etc.), in particular in the Operating System running on this device, or alternatively be implemented as an application software to download on such a device.

In an advantageous embodiment, all these specific modules may be gathered in a single message processing module, in particular in the form of a single application to be download on a device (such as a mobile device, smartphone, tablet, etc.) : in that way, once it has downloaded this application, the device can send or receive messages through forwarding devices and/or act as a forwarding device for other devices, depending on its location and its user's needs or preferences.

Moreover, it is known to those skilled in the art, the aforementioned examples according to the present invention, can be implemented in many ways, such as program instructions for execution by a processor, as software modules, microcode, as computer program product on computer readable media, as logic circuits, as application specific integrated circuits, as firmware, etc. The embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the embodiments of the invention can take the form of a computer program product accessible from a computer-usable or computer-readable medium providing program code for use by or in connection with a computer, processing device, or any instruction execution system. For the purposes of this description, a computer-usable or computer readable medium can be any apparatus that can contain, store, communicate, or transport the program for use by or in connection with the instruction execution system, apparatus, or device. The medium can be electronic, magnetic, optical, or a semiconductor system (or apparatus or device).

The embodiments described hereinabove are illustrations of this invention. Various modifications can be made to them without leaving the scope of the invention which stems from the annexed claims.

## Claims

1. A method for message transmission between devices, comprising:
- storing a first message received from a first device (A) through internet, said first message being intended for a second device (B); and
- after a positive determination that a short-range wireless connection is established with said second device (B), forwarding the first message to said second device (B) through said short-range wireless connection.

2. The method according to claim 1, wherein the steps of storing and forwarding of the first message are performed by a third device (C), and wherein the method further comprises :
- sending the first message from said first device (A) to a dedicated server through internet;
- sending the first message from the dedicated server to the third device (C) through internet.

3. The method according to claim 1 or 2, wherein a first identification information related to the second device is inserted by the first device in the first message, said first identification information being used when sending the first message through internet and/or when forwarding the first message to the second device by the third device through a short-range wireless connection.

4. The method according to any one of claims 1 to 3, further comprising, after the step of forwarding the first message to said second device through said short-range wireless connection, deleting said first message.

5. The method according to claim 4, where the step of deleting said first message is automatically triggered upon the transmission, by said third device (C), of the first message towards said second device (B).

6. The method according to claim 4, where the step of deleting said first message is automatically triggered upon reception, by said third device (C), of a receipt acknowledge message, sent by one of said second device (B) or dedicated server upon receiving said first message.

7. The method according to any one of claims 1 to 6, further comprising:
- storing a second message received from the second device (B) through a short-range wireless connection, said second message being intended for the first device (A); and
- after a positive determination that a connection to internet can be established, forwarding the second message towards said first device through internet.

8. The method according to claim 7, wherein the steps of storing and forwarding the second message are performed by a third device (C) and wherein, before that the third device receives the second message from the second device (A), the method comprises the following steps, performed by the second device :
- detecting at least one device able to forward the second message to the first device ; and
- selecting said third device among the detected at least one device.

9. The method according to claim 7 or 8, wherein in the step of forwarding the second message from the dedicated server towards the first device through internet, the method further comprises the following steps:
- sending the second message from a dedicated server to a fourth device (D) which is capable of being associated through a short-range wireless connection with the first device (A);
- sending the second message from the fourth device (D) to the first device (A) when a short-range wireless connection is established between the fourth device (D) and the first device (A).

10. The method according to any one of claims 7 to 9, wherein a second identification information related to the first device is inserted by the second device in the second message, said second identification information being used when forwarding the second message to the first device.

11. The method according to any one of claims 7 to 10, further comprising, after the step of forwarding the second message to said first device through internet, deleting said second message.

12. The method according to any one of claims 1 to 11, wherein the first message is encrypted.

13. A device for forwarding messages between devices, said forwarding device (C) comprising:
- a module for receiving a first message from a first device (A) through internet, said first message being intended for a second device (B);
- a module for storing the received first message; and
- a module for, after a positive determination that said forwarding device (C) has established a short-range wireless connection with said second device (B), forwarding the first message to said second device (B) through said short-range wireless connection.

14. The device according to claim 13, said device further comprising:
- a module for receiving a second message from the second device through a short-range wireless connection, said second message being intended for said first device;
- a module for storing said second message; and
- a module for, after a positive determination that the forwarding device can connect with the first device through internet, forwarding the second message towards said first device through internet.

15. A computer program comprising instructions which, when the program is executed by a processing module of a device, cause the processing module to carry out the method of any one of claims 1 to 12.
